# EUROPÄISCHE PATENTSCHRIFT

(11) **EP 2 989 129 B1**
(45) Veröffentlichungstag und Bekanntmachung des Hinweises auf die Patenterteilung: **01.03.2017**
(21) Anmeldenummer: 14716845.4
(22) Anmeldetag: 11.04.2014
(51) Int. Cl.: C08C 19/30, B60C 1/00, C08C 19/36, C08F 236/06, C08F 236/10, C08C 19/44, C08L 25/10

(54) **SILANHALTIGE CARBOXYTERMINIERTE POLYMERE**
CARBOXYL-TERMINATED POLYMERS CONTAINING SILANES
POLYMÈRE CARBOXYTERMINÉ CONTENANT DU SILANE

(30) Priorität: 24.04.2013 EP 13165209
(43) Veröffentlichungstag der Anmeldung: 02.03.2016
(73) Patentinhaber: ARLANXEO Deutschland GmbH, 41540 Dormagen (DE)
(72) Erfinder: STEINHAUSER, Norbert, 41539 Dormagen (DE); GROß, Thomas, 42489 Wülfrath (DE)
(74) Vertreter: Wichmann, Birgid
(86) Internationale Anmeldenummer: PCT/EP2014/057424
(87) Internationale Veröffentlichungsnummer: WO 2014/173706

(56) Entgegenhaltungen:
- EP-A1- 2 452 951
- JP-A- S6 210 137
- US-A- 4 788 313
- US-A- 6 071 995
- US-A1- 2012 165 464

## Beschreibung

Die Erfindung betrifft endgruppenfunktionalisierte Polymere, deren Herstellung und Verwendung.

Bei Reifenlaufflächen werden als wichtige Eigenschaften eine gute Haftung auf trockener und nasser Oberfläche, ein geringer Rollwiderstand sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Laufleistung des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen unter anderem in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Die Einführung funktioneller Gruppen an den Polymerkettenenden und/oder an den Polymerkettenanfängen ermöglicht eine physikalische oder chemische Anbindung dieser Polymerkettenenden bzw. -anfänge an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Gruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Zu diesem Zweck sind zahlreiche Methoden zur Gruppenmodifizierung entwickelt worden. Beispielsweise werden in der JP S62 10137 engruppenfunktionalisierte Polysiloxane mit Carboxyl enthaltende Endgruppen beschrieben. Die US 4788313 beschreibt Carboxyalkylsubstituierte Organopolysiloxane. EP 2452 951 A1 beschreibt engruppenfunktionalisierte Polymere, wobei diese am Kettenende eine silanhaltige Carbinolgruppe aufweisen. US 2012/165464 A1 beschreibt ein Verfahren zur Herstellung eines funktionalisierten Polymers, wobei das Verfahren den Schritt der Reaktion eines reaktiven Polymers mit einem Funktionalisierungsmittel umfasst. US 6071995 A beschreibt Kautschukzusammensetzung enthaltend Russ mit auf dessen Oberfläche fixiertem Siliciumdioxid und ein mit Silanol-Gruppe funktionalisiertes oder modifiziertes Dienpolymer. Weiteres beispielsweise wird in der EP0180141A1 die Verwendung von 4,4-Bis(dimethylamino)-benzophenon oder N-Methylcaprolactam als Funktionalisierungsreagenzien beschrieben. Auch die Verwendung von Ethylenoxid und N-Vinylpyrrolidon ist aus EP0864606A1 bekannt. Eine Reihe weiterer möglicher Funktionalisierungsreagenzien sind in US4417029 aufgeführt. Methoden zur Einführung von funktionellen Gruppen an den Polymerkettenanfängen mittels funktioneller anionischer Polymerisationsinitiatoren sind zum Beispiel in EP0513217A1 und EP0675140A1 (Initiatoren mit geschützter Hydroxylgruppe), US20080308204A1 (Thioether enthaltende Initiatoren) sowie in US5792820, EP0590490A1 und EP0594107A1 (Alkaliamide von sekundären Aminen als Polymerisationsinitiatoren) beschrieben.

Die Carboxygruppe als stark polarer, zweizähniger Ligand kann besonders gut mit der Oberfläche des Silikafüllstoffes in der Kautschukmischung wechselwirken. Methoden zur Einführung von Carboxygruppen entlang der Polymerkette von in Lösung hergestellten Dienkautschuken sind bekannt und beispielsweise beschrieben in DE2653144A1, EP1000971A1, EP1050545A1, WO2009034001A1. Diese Methoden haben mehrere Nachteile, so zum Beispiel, dass lange Reaktionszeiten benötigt werden, dass ein nur unvollständiger Umsatz der Funktionalisierungsreagenzien erfolgt und dass eine Veränderung der Polymerketten durch Nebenreaktionen wie Verzweigung auftritt. Außerdem ermöglichen diese Methoden nicht die besonders wirkungsvolle Funktionalisierung der Polymerkettenenden.

Die Einführung von Carboxygruppen an den Kettenenden von Dienkautschuken ist ebenfalls beschrieben, so zum Beispiel in US3242129 durch Umsetzung der anionischen Polymerkettenenden mit CO₂. Diese Methode hat den Nachteil, dass die Polymerlösung mit gasförmigem CO₂ in Kontakt gebracht werden muss, was sich wegen der hohen Viskosität und der dadurch bedingten schlechten Durchmischung als schwierig erweist. Zusätzlich treten schwer zu kontrollierende Kopplungsreaktionen durch Reaktion von mehr als einem Polymerkettenende am Kohlenstoffatom des CO₂ auf. Diese Kopplung kann durch sequentielle Umsetzung der carbanionischen Polymerkettenenden zuerst mit Ethylenoxid oder Propylenoxid und anschließende Reaktion der nun alkoxidischen Polymerkettenenden mit einem zyklischen Anhydrid vermieden werden (US4465809). Aber auch hier hat man den Nachteil, dass gasförmiges und zudem sehr toxisches Ethylenoxid oder Propylenoxid in die hochviskose Kautschuklösung eingebracht werden muss. Darüber hinaus bilden sich durch Reaktion der alkoxidischen Kettenenden mit dem zyklischen Anhydrid hydrolyseanfällige Esterbindungen, die bei der Aufarbeitung und beim späteren Einsatz gespalten werden können.

Insbesondere Silane und Cyclosiloxane mit in der Summe mindestens zwei Halogen- und/oder Alkoxy- und/oder Aryloxysubstituenten an Silicium eignen sich gut zur Endgruppenfunktionalisierung von Dienkautschuken, da einer der genannten Substituenten am Si-Atom leicht in einer schnellen Substitutionsreaktion durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US3244664, US4185042, EP0778311A1 und US20050203251A1.

Diese Silane weisen in der Regel funktionelle Gruppen auf, die direkt an das Si-Atom gebunden sind oder über einen Spacer mit Si verbunden sind und die mit der Oberfläche des Silikafüllstoffes in der Kautschukmischung wechselwirken können. Bei diesen funktionellen Gruppen handelt es sich in der Regel um Alkoxygruppen oder Halogene direkt an Si, sowie um tertiäre Aminosubstituenten, die über einen Spacer an Si gebunden sind. Nachteile dieser Silane sind die mögliche Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung. Die Einführung von Carboxygruppen mittels dieser Silane ist nicht beschrieben.

WO2012/065908A1 beschreibt 1-Oxa-2-silacycloalkane als Funktionalisierungsreagenzien zur Einführung von Hydroxyendgruppen an Dienpolymeren. Diese 1-Oxa-2-silacycloalkane weisen die Nachteile der im vorigen Absatz beschriebenen Silane, wie Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung, nicht auf. Allerdings ermöglichen auch diese Funktionalisierungsreagenzien nicht die Einführung von Carboxygruppen an den Polymerkettenenden.

Es bestand daher die Aufgabe, carboxyterminierte Polymere bereitzustellen, die die Nachteile des Standes der Technik nicht aufweisen und es insbesondere ermöglichen, die gute Reaktivität von Silanen mit anionischen Polymerkettenenden zu nutzen.

Zur Lösung dieser Aufgabe werden endgruppenfunktionalisierte Polymere vorgeschlagen, welche am Polymerkettenende eine silanhaltige Carboxygruppe der Formel (I) 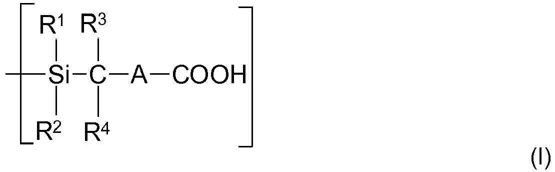 aufweisen, wobei
- R¹, R²: gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
- R³, R⁴: gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
- A: für einen divalenten organischen Rest steht, der neben C und H ein oder mehrere Heteroatome, bevorzugt O, N, S oder Si enthalten kann.

Bevorzugt können die erfindungsgemäßen endgruppenfunktionalisierten Polymere als Carboxylate vorliegen mit Endgruppen der Formel (II): 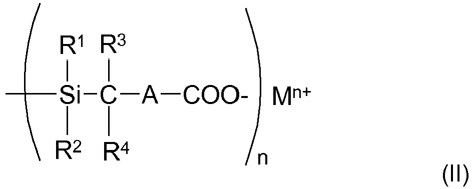 wobei
- R¹, R²: gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
- R³, R⁴: gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
- A: für einen divalenten organischen Rest steht, der neben C und H ein oder mehrere Heteroatome, bevorzugt O, N, S oder Si enthalten kann,
- n: eine ganze Zahl von 1 bis 4 ist,
- M: ein Metall oder Halbmetall der Wertigkeit 1 bis 4 ist, vorzugsweise Li, Na, K, Mg, Ca, Zn, Fe, Co, Ni, Al, Nd, Ti, Sn, Si, Zr, V, Mo oder W.

Bevorzugte Polymere zur Herstellung der erfindungsgemäßen endgruppenfunktionalisierten Polymere sind Dienpolymere und durch Copolymerisation von Dienen mit vinylaromatischen Monomeren erhältliche Dien-Copolymere.

Als Diene sind 1,3-Butadien, Isopren, 1,3-Pentadien, 2,3-Dimethylbutadien, 1-Phenyl-1,3-butadien und/oder 1,3-Hexadien bevorzugt. Besonders bevorzugt werden 1,3-Butadien und/oder Isopren eingesetzt.

Als vinylaromatische Comonomere können beispielsweise Styrol, o-, m- und/oder p-Methylstyrol, p-*tert*-Butylstyrol, α-Methylstyrol, Vinylnaphthalin, Divinylbenzol, Trivinylbenzol und/oder Divinylnaphthalin verwendet werden. Besonders bevorzugt wird Styrol eingesetzt.

Die Herstellung dieser Polymere erfolgt bevorzugt durch anionische Lösungspolymerisation oder durch Polymerisation mittels Koordinationskatalysatoren. Unter Koordinationskatalysatoren sind in diesem Zusammenhang Ziegler-Natta-Katalysatoren oder monometallische Katalysatorsysteme zu verstehen. Bevorzugte Koordinationskatalysatoren sind solche auf Basis Ni, Co, Ti, Zr, Nd, V, Cr, Mo, W oder Fe.

Initiatoren für die anionische Lösungspolymerisation sind solche auf Alkali- oder Erdalkalimetallbasis, beispielsweise Methyllithium, Ethyllithium, Isopropyllithium, *n*-Butyllithium, sec-Butyllithium, Pentyllithium, *n*-Hexyllithium, Cyclohexyllithium, Octyllithium, Decyllithium, 2-(6-Lithio-*n*-hexoxy)tetrahydropyran, 3-(*tert*-Butyldimethylsiloxy)-1-propyllithium, Phenyllithium, 4-Butylphenyllithium, 1-Naphthyllithium, p-Toluyllithium sowie Allyllithium-Verbindungen, abgeleitet von tertiären N-Allylaminen, wie [1-(Dimethylamino)-2-propenyl]lithium, [1-[Bis(phenylmethyl)amino]-2-propenyl]lithium, [1-(Diphenylamino)-2-propenyl]lithium, [1-(1-pyrrolidinyl)-2-propenyl]lithium, Lithiumamide sekundärer Amine wie Lithiumpyrrolidid, Lithiumpiperidid, Lithiumhexamethylenimid, Lithium-1-methylimidazolidid, Lithium-1-methylpiperazid, Lithiummorpholid, Lithiumdicyclohexylamid, Lithiumdibenzylamid, Lithiumdiphenylamid. Diese Allyllithiumverbindungen und diese Lithiumamide können auch *in situ* durch Reaktion einer Organolithiumverbindung mit den jeweiligen tertiären N-Allylaminen bzw. mit den jeweiligen sekundären Aminen hergestellt werden. Des Weiteren können auch di- und polyfunktionelle Organolithiumverbindungen eingesetzt werden, beispielsweise 1,4-Dilithiobutan, Dilithiumpiperazid. Bevorzugt werden *n*-Butyllithium und sec-Butyllithium eingesetzt.

Zusätzlich können die bekannten Randomizer und Kontrollagenzien für die Mikrostruktur des Polymers verwendet werden, beispielsweise Diethylether, Di-*n*-propylether, Diisopropylether, Di-*n*-butylether, Ethylenglykoldimethylether, Ethylenglykoldiethylether, Ethylengykoldi-*n*-butylether, Ethylengykoldi-*tert*-butylether, Diethylenglykoldimethylether, Diethylenglykoldiethylether, Diethylenglykoldi-*n*-butylether, Diethylenglykoldi-*tert-*butylether, 2-(2-Ethoxyethoxy)-2-methylpropan, Triethylenglykoldimethylether, Tetrahydrofuran, Ethyltetrahydrofurfurylether, Hexyltetrahydrofurfurylether, 2,2-Bis(2-tetrahydrofuryl)propan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan, 1,2-Dimorpholinoethan sowie Kalium- und Natriumsalze von Alkoholen, Phenolen, Carbonsäuren, Sulfonsäuren.

Derartige Lösungspolymerisationen sind bekannt und beispielsweise in I. Franta, Elastomers and Rubber Compounding Materials; Elsevier 1989, Seite 113 - 131, in

Houben-Weyl, Methoden der Organischen Chemie, Thieme Verlag, Stuttgart, 1961, Band XIV/1 Seiten 645 bis 673 oder im Band E 20 (1987), Seiten 114 bis 134 und Seiten 134 bis 153 sowie in Comprehensive Polymer Science, Vol. 4, Part II (Pergamon Press Ltd., Oxford 1989), Seiten 53-108 beschrieben.

Die Herstellung der bevorzugten Dienhomo- und Diencopolymere findet vorzugsweise in einem Lösungsmittel statt. Als Lösungsmittel für die Polymerisation werden vorzugsweise inerte aprotische Lösungsmittel, wie beispielsweise paraffinische Kohlenwasserstoffe, wie isomere Butane, Pentane, Hexane, Heptane, Octane, Decane, Cyclopentan, Methylcyclopentan, Cyclohexan, Methylcyclohexan, Ethylcyclohexan oder 1,4-Dimethylcyclohexan oder Alkene wie 1-Buten oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan, Methylcyclopentan und n-Hexan. Ebenfalls möglich ist die Abmischung mit polaren Lösungsmitteln.

Die Menge an Lösungsmittel liegt bei dem erfindungsgemäßen Verfahren üblicherweise im Bereich von 100 bis 1000 g, bevorzugt im Bereich von 200 bis 700 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisation kann in der Weise durchgeführt werden, dass zuerst die Monomere und das Lösungsmittel vorgelegt werden und dann die Polymerisation durch Zugabe des Initiators oder Katalysators gestartet wird. Es ist auch möglich in einem Zulaufverfahren zu polymerisieren, bei dem der Polymerisationsreaktor durch Zugabe von Monomeren und Lösungsmittel befüllt wird, wobei der Initiator oder Katalysator vorgelegt wird oder mit den Monomeren und dem Lösungsmittel zugegeben wird. Variationen, wie Vorlegen des Lösungsmittels im Reaktor, Zugabe des Initiators oder Katalysators und dann Zugabe der Monomere sind möglich. Weiterhin kann die Polymerisation in einer kontinuierlichen Fahrweise betrieben werden. Weitere Monomer- und Lösungsmittelzugabe während oder am Ende der Polymerisation ist in allen Fällen möglich.

Die Polymerisationszeit kann in breiten Bereichen von einigen Minuten bis zu einigen Stunden schwanken. Üblicherweise wird die Polymerisation innerhalb einer Zeitspanne von 10 Minuten bis zu 8 Stunden, bevorzugt 20 Minuten bis 4 Stunden, durchgeführt. Sie kann sowohl bei Normaldruck als auch bei erhöhtem Druck (von 1 bis 10 bar) durchgeführt werden.

Es wurde überraschend festgestellt, dass durch die Verwendung von einem oder mehreren Silalactonen als Funktionalisierungsreagenzien carboxyterminierte Polymere hergestellt werden können, welche die Nachteile des Standes der Technik nicht aufweisen.

Bei den Silalactonen handelt es sich um Verbindungen der Formel (III) 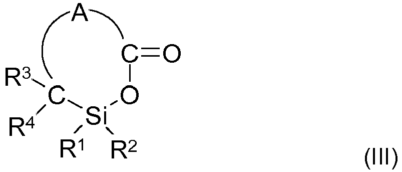 wobei
- R¹, R²: gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
- R³, R⁴: gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
- A: für einen divalenten organischen Rest steht, der neben C und H ein oder mehrere Heteroatome, bevorzugt O, N, S oder Si enthalten kann,
wobei bevorzugt,
- R¹, R²: gleich oder verschieden sind und ein H, (C₁-C₂₄)-Alkyl-, (C₁-C₂₄)-Alkoxy-, (C₃-C₂₄)-Cycloalkyl-, (C₃-C₂₄)-Cycloalkoxy-, (C₆-C₂₄)-Aryl-, (C₆-C₂₄)-Aryloxy-, (C₆-C₂₄)-Alkaryl-, (C₆-C₂₄)-Alkaryloxy-, (C₆-C₂₄)-Aralkyl- oder (C₆-C₂₄)-Aralkoxyreste darstellen, die ein oder mehrere Heteroatome, bevorzugt O, N, S oder Si enthalten können, und
- R³, R⁴: gleich oder verschieden sind und ein H, (C₁-C₂₄)-Alkyl-, (C₃-C₂₄)-Cycloalkyl-, (C₆-C₂₄)-Aryl-, (C₆-C₂₄)-Alkaryl- oder (C₆-C₂₄)-Aralkylreste darstellen, die ein oder mehrere Heteroatome, bevorzugt O, N, S oder Si enthalten können.

Beispiele für Verbindungen der Formel (III) sind:
2,2-Dimethyl-1-oxa-2-silacyclohexan-6-on (1), 2,2,4-Trimethyl-1-oxa-2-silacyclohexan-6-on (2), 2,2,5-Trimethyl-1-oxa-2-silacyclohexan-6-on (3), 2,2,4,5-Tetramethyl-1-oxa-2-silacyclohexan-6-on (4), 2,2-Diethyl-1-oxa-2-silacyclohexan-6-on (5), 2,2-Diethoxy-1-oxa-2-silacyclohexan-6-on (6), 2,2-Dimethyl-1,4-dioxa-2-silacyclohexan-6-on (7), 2,2,5-Trimethyl-1,4-dioxa-2-silacyclohexan-6-on (8), 2,2,3,3-Tetramethyl-1,4-dioxa-2-silacyclohexan-6-on (9), 2,2-Dimethyl-1-oxa-4-thia-2-silacyclohexan-6-on (10), 2,2-Diethyl-1-oxa-4-thia-2-silacyclohexan-6-on (11), 2,2-Diphenyl-1-oxa-4-thia-2-silacyclohexan-6-on (12), 2-Metyl-2-ethenyl-1-oxa-4-thia-2-silacyclohexan-6-on (13), 2,2,5-Trimethyl-1 oxa-4-thia-2-silacyclohexan-6-on (14), 2,2-Dimethyl-1-oxa-4-aza-2-silacyclohexan-6-on (15), 2,2,4-Trimethyl-1-oxa-4-aza-2-silacyclohexan-6-on (16), 2,4-Dimethyl-2-phenyl-1-oxa-4-aza-2-silacyclohexan-6-on (17), 2,2-Dimethyl-4-trimethylsilyl-1-oxa-4-aza-2-silacyclohexan-6-on (18), 2,2-Diethoxy-4-methyl-1-oxa-4-aza-2-silacyclohexan-6-on (19), 2,2,4,4-Tetramethyl-1-oxa-2,4-disilacyclohexan-6-on (20), 3,4-Dihydro-3,3-dimethyl-1*H*-2,3-benzoxasilin-1-on (21), 2,2-Dimethyl-1-oxa-2-silacyclopentan-5-on (22), 2,2,3-Trimethyl-1-oxa-2-silacyclopentan-5-on (23), 2,2-Dimethyl-4-phenyl-1-oxa-2-silacyclopentan-5-on (24), 2,2-Di(*tert*-butyl)-1-oxa-2-silacyclopentan-5-on (25), 2-methyl-2-(2-propen-1-yl)-1-oxa-2-silacyclopentan-5-on (26), 1,1-Dimethyl-2,1-benzoxasilol-3(1*H*)-on (27), 2,2-Dimethyl-1-oxa-2-silacycloheptan-7-on (28).

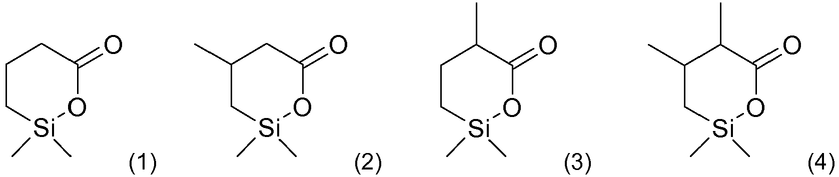

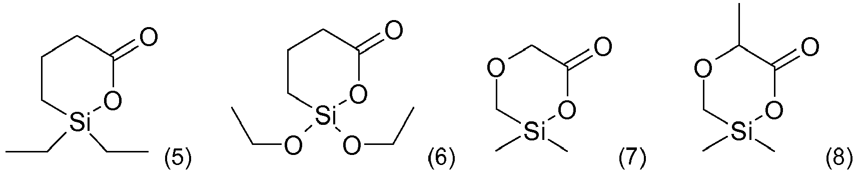

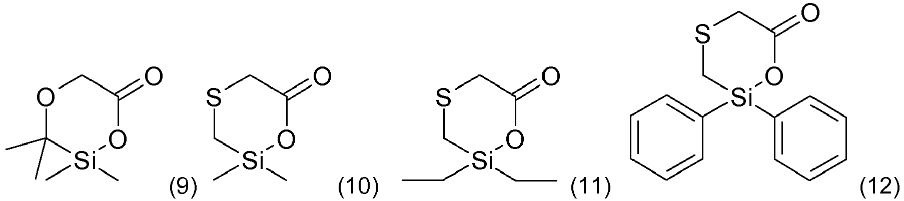

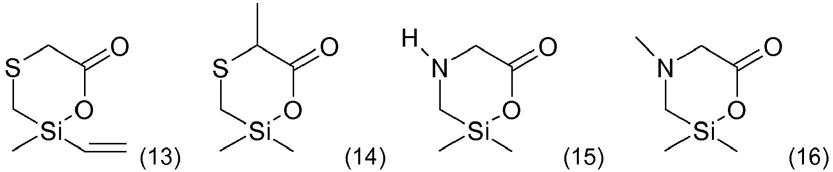

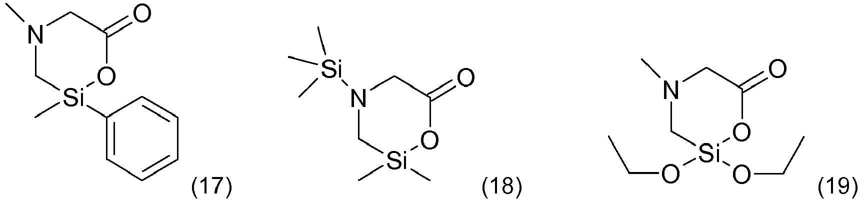

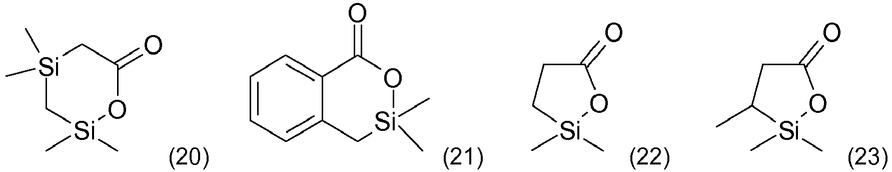

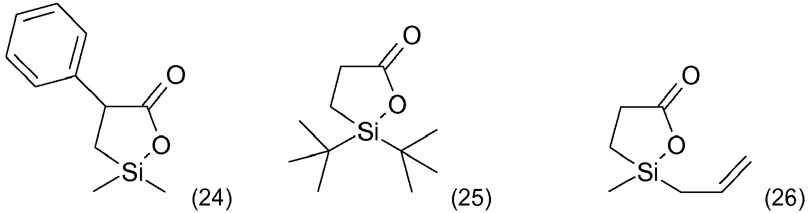

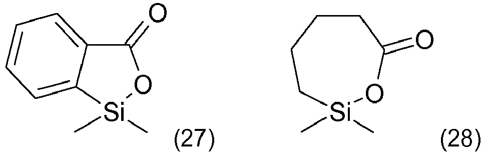

Die Synthesen derartiger Silalactone sind beispielsweise beschrieben in US 2,635,109; M. Wieber, M. Schmidt, Chemische Berichte 1963, 96 (10), 2822-5; J.M. Wolcott, F.K. Cartledge, Journal of Organic Chemistry 1974, 39 (16), 2420-4; M.P. Sibi, J.W. Christensen, Tetrahedron Letters 1995, 36 (35), 6213-6; T. Linker, M. Maurer, F. Rebien, Tetrahedron Letters 1996, 37 (46), 8363-6; M. Shindo et al., Angewandte Chemie, International Edition 2004, 43 (1), 104-6.

Es wurde festgestellt, dass die erfindungsgemäßen endgruppenfunktionalisierten Polymere durch Reaktion von reaktiven Polymerkettenenden mit Silalactonen und gegebenenfalls nachfolgender Protonierung der dabei hergestellten Carboxylat-Endgruppe zur Carboxy-Endgruppe hergestellt werden können.

Somit ist auch die Verwendung von Silalactonen als Funktionalisierungsreagenzien zur Herstellung der erfindungsgemäßen endgruppenfunktionalisierten Polymere mit Endgruppen der Formel (I) oder (II) Gegenstand der Erfindung.

Bei Umsetzung von Polymeren, die sehr reaktive nucleophile Polymerkettenenden aufweisen mit Verbindungen der Formel (III) kann die Anbindung der Polymerketten nicht nur am Si-Atom des Funktionalisierungsreagenzes erfolgen, sondern es kann zusätzlich eine Anbindung am Carbonyl-C-Atom auftreten. Dies führt zu einer linearen Kopplung der Polymerketten (Schema 1). In diesem Fall liegt eine Polymermischung vor. Polymere mit sehr reaktiven Polymerkettenenden sind beispielsweise Dienhomo- und Diencopolymere, die mittels anionischer Polymerisation oder mit Koordinationskatalysatoren hergestellt werden.

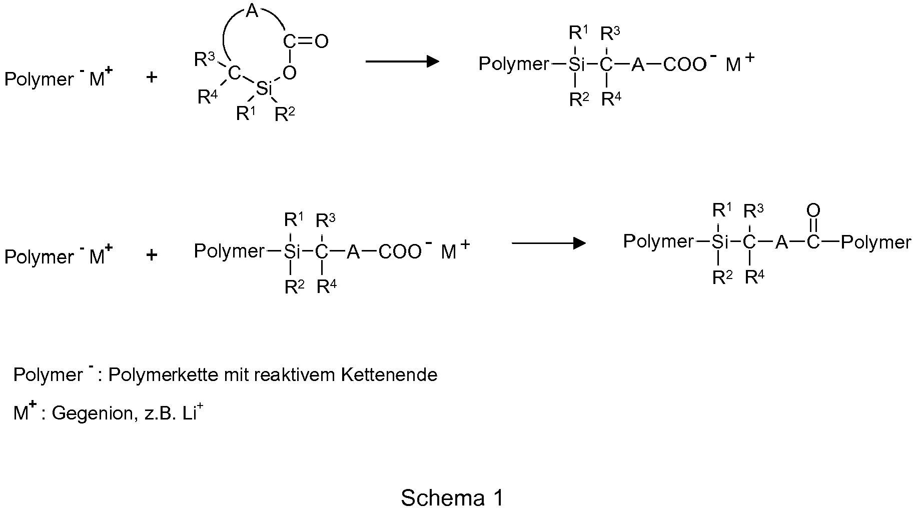

Derartige Kopplungsreaktionen können in manchen Fällen erwünscht sein, um die Polydispersität zu erhöhen und auf diese Weise rheologische Eigenschaften der Polymere wie Mooney-Viskosität und Cold Flow zu beeinflussen. In anderen Fällen kann es von Vorteil sein, die Kopplungsreaktion zu unterdrücken, um eine möglichst hohe Anzahl an funktionalisierten Polymerkettenenden zu erhalten, was sich positiv auf die dynamisch-mechanischen Eigenschaften der Vulkanisate, die diese Polymere enthalten, auswirken sollte.

Es wurde nun überraschend gefunden, dass sich die Kopplungsreaktion nach Schema 1 nahezu vollständig (<5 Gew.-% bezogen auf die Gesamtmenge an Polymer) verhindern lässt, wenn man Polymere, die sehr reaktive nucleophile Polymerkettenenden aufweisen, in einem ersten Schritt mit einem Reagenz umsetzt, das zu Polymeren mit Silanol- oder Silanolat-Endgruppen führt und in einem zweiten Schritt diese Polymere mit Silanol- oder Silanolat-Endgruppen mit Verbindungen der Formel (III) reagieren lässt (Schema 2). Ebenso ist es möglich, gezielt einen gewünschten Kopplungsgrad einzustellen, indem man im ersten Schritt nicht alle sehr reaktiven, nucleophilen Polymerkettenenden mit einem Reagenz umsetzt, das zu Polymeren mit Silanol- oder Silanolat-Endgruppen führt.

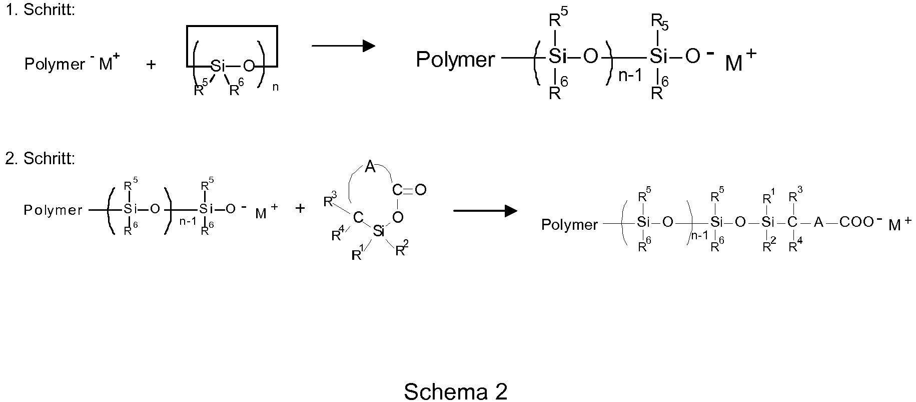

Derartige Reagenzien, die im ersten Schritt eingesetzt werden, können direkt oder indirekt (beispielsweise über eine nachfolgende Hydrolyse von Si-Cl-Gruppen) zu Silanol- bzw. Silanolat-Endgruppen führen. Bevorzugt sind jedoch Reagenzien, die in direkter Reaktion Silanolat-Endgruppen ergeben. Ganz besonders bevorzugt sind Cyclosiloxane der Formel (IV), 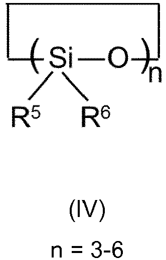 wobei R⁵, R⁶ in Schema 2 und in Formel (IV) gleich oder verschieden sind und ein H, Alkyl-, Cycloalkyl-, Aryl-, Alkaryl- und Aralkylreste darstellen, der ein oder mehrere Heteroatome, bevorzugt O, N, S oder Si enthalten kann.

Bevorzugt sind Hexamethylcyclotrisiloxan, Octamethylcyclotetrasiloxan, Decamethylcyclopentasiloxan und Dodecamethylcyclohexasiloxan sowie Gemische von Cyclosiloxanen unterschiedlicher Ringgröße.

Die in Schema 2 erhältlichen Zwischenprodukte können mit dem Fachmann bekannten Methoden isoliert werden.

Die erfindungsgemäßen endgruppenfunktionalisierten Polymere weisen vorzugsweise mittlere Molgewichte (Zahlenmittel, Mₙ) von 10.000 bis 2.000.000 g/mol, bevorzugt von 100.000 bis 1.000.000 g/mol und Glasübergangstemperaturen von -110°C bis +20°C, bevorzugt von -110°C bis 0°C, sowie Mooney-Viskositäten [ML 1+4 (100°C)] von 10 bis 200, vorzugsweise von 30 bis 150 Mooney-Einheiten auf.

Ein weiterer Gegenstand der Erfindung ist ein Verfahren zur Herstellung der erfindungsgemäßen endgruppenfunktionalisierten Polymere, wonach ein oder mehrere Verbindungen der Formel (III), als Reinstoff, Lösung oder Suspension, zu Polymeren mit reaktiven Polymerkettenenden gegeben werden. Die Zugabe erfolgt bevorzugt nach Abschluss der Polymerisation; sie kann aber auch vor vollständigem Monomerumsatz erfolgen. Die Reaktion von Verbindungen der Formel (III) mit Polymeren mit reaktiven Polymerkettenenden erfolgt bei den üblicherweise für die Polymerisation verwendeten Temperaturen. Die Reaktionszeiten für die Umsetzung von Verbindungen der Formel (III) mit den reaktiven Polymerkettenenden kann zwischen einigen Minuten bis mehreren Stunden liegen.

Die Menge dieser Verbindungen kann so gewählt werden, dass alle reaktiven Polymerkettenenden mit Verbindungen der Formel (III) reagieren, oder es kann ein Unterschuss dieser Verbindungen eingesetzt werden. Die eingesetzten Mengen der Verbindungen der Formel (III) können einen weiten Bereich abdecken. Die bevorzugten Mengen liegen in einem Bereich von 0,005 bis 2 Gew.-%, besonders bevorzugt in einem Bereich von 0,01 bis 1 Gew.-%, bezogen auf die Menge an Polymer.

Ein weiterer Gegenstand der Erfindung ist die Umsetzung von Polymeren mit carbanionischen Kettenenden (erhalten aus der anionischen Polymerisation oder der Polymerisation mit Koordinationskatalysatoren) zuerst mit Cyclosiloxanen der Formel (IV) und in einem nächsten Schritt die Umsetzung der aus dem ersten Schritt erhaltenen silanolatterminierten Polymere mit Verbindungen der Formel (III) zu carboxylatterminierten Polymeren. Die Cyclosiloxane der Formel (IV) können rein oder als Gemisch unterschiedlicher Cyclosiloxane eingesetzt werden. Die Menge der Cyclosiloxane kann so gewählt werden, dass alle reaktiven Polymerkettenenden mit Cyclosiloxanen der Formel (IV) reagieren, oder es kann ein Unterschuss dieser Verbindungen eingesetzt werden. Die eingesetzten Mengen der Cyclosiloxane der Formel (IV) können einen weiten Bereich abdecken. Die bevorzugten Mengen liegen in einem Bereich von 0,002 bis 4 Gew.-%, besonders bevorzugt in einem Bereich von 0,005 bis 2 Gew.-%, bezogen auf die Menge an Polymer. Die Menge an Verbindungen der Formel (III) des darauffolgenden Schrittes wird idealerweise so gewählt, dass alle gegebenenfalls vorhandenen carbanionischen Polymerkettenenden und alle silanolatterminierten Polymerkettenenden mit Verbindungen der Formel (III) reagieren. Das bevorzugte Stoffmengenverhältnis Silalacton zu Cyclosiloxan ist 20:1 bis 1:1, besonders bevorzugt ist ein Stoffmengenverhältnis Silalacton zu Cyclosiloxan von 10:1 bis 1:1, ganz besonders bevorzugt ist ein Stoffmengenverhältnis von 3:1 bis 1:1.

Zusätzlich zu Verbindungen der Formel (III) und Cyclosiloxanen der Formel (IV) können auch die für die anionische Dienpolymerisation typischen Kopplungsreagenzien zur Reaktion mit den reaktiven Polymerkettenenden eingesetzt werden. Beispiele für solche Kopplungsreagenzien sind Siliciumtetrachlorid, Methyltrichlorsilan, Dimethyldichlorsilan, Zinntetrachlorid, Dibutylzinndichlorid, Tetraalkoxysilane, Ethylenglykoldiglycidylether, 1,2,4-Tris(chlormethyl)benzol. Solche Kopplungsreagenzien können vor den Verbindungen der Formel (III) zugesetzt werden, zusammen mit diesen oder nach diesen.

Nach Zugabe von Verbindungen der Formel (III) und gegebenenfalls von Kopplungsreagenzien werden vor oder während der Aufarbeitung der erfindungsgemäßen silanhaltigen carboxylatterminierten Polymere bevorzugt die üblichen Alterungsschutzmittel, wie sterisch gehinderte Phenole, aromatische Amine, Phosphite, Thioether, zugesetzt. Weiterhin können die üblichen, für Dienkautschuke verwendeten Strecköle, wie DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle zugegeben werden. Auch die Zugabe von Füllstoffen, wie Ruß und Kieselsäure, Kautschuken und Kautschukhilfsmitteln ist möglich.

Die Entfernung des Lösungsmittels aus dem Polymerisationsprozess kann nach den üblichen Verfahren, wie Destillation, Strippen mit Wasserdampf oder Anlegen eines Vakuums, gegebenenfalls bei höherer Temperatur, erfolgen.

Ein weiterer Erfindungsgegenstand ist die Verwendung der erfindungsgemäßen endgruppenfunktionalisierten Polymere zur Herstellung von vulkanisierbaren Kautschukzusammensetzungen.

Vorzugsweise weisen diese vulkanisierbaren Kautschukzusammensetzungen weitere Kautschuke, Füllstoffe, Kautschukchemikalien, Verarbeitungshilfsmittel und Strecköle auf.

Zusätzliche Kautschuke sind beispielsweise Naturkautschuk sowie Synthesekautschuke. Sofern vorhanden, liegt deren Menge üblicherweise im Bereich von 0,5 bis 95 Gew.-%, bevorzugt im Bereich von 10 bis 80 Gew.-%, bezogen auf die gesamte Polymermenge in der Mischung. Die Menge an zusätzlich zugegebenen Kautschuken richtet sich wieder nach dem jeweiligen Verwendungszweck der erfindungsgemäßen Mischungen. Beispiele für solche Syntheskautschuke sind BR (Polybutadien), Acrylsäure-Alkylester-Copolymere, IR (Polyisopren), E-SBR (Styrol-Butadien-Copolymerisate hergestellt durch Emulsionspolymerisation), S-SBR (Styrol-Butadien-Copolymerisate hergestellt durch Lösungspolymerisation), IIR (Isobutylen-Isopren-Copolymerisate), NBR (Butadien-Acrylnitril-Copolymere), HNBR (teilhydrierter oder vollständig hydrierter NBR-Kautschuk), EPDM (Ethylen-Propylen-Dien-Terpolymerisate) sowie Mischungen dieser Kautschuke. Für die Herstellung von Kfz-Reifen sind insbesondere Naturkautschuk, E-SBR sowie S-SBR mit einer Glastemperatur oberhalb von -60°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukzusammensetzungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt beispielsweise durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin, Montmorillonit und andere natürlich vorkommende Kieselsäuren;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie beispielsweise Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, beispielsweise SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTM N110-, N 219-, N220-, N231-, N234-, N242-, N294-, N326-, N327-, N330-, N332-, N339-, N347-, N351-, N 356-, N358-, N375-, N472-, N539-, N550-, N568-, N650-, N660-, N754-, N762-, N765-, N774-, N787- und N990-Ruße;
- Kautschukgele, insbesondere solche auf Basis von BR, E-SBR und/oder Polychloropren mit Teilchengrößen von 5 bis 1000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukzusammensetzungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01:1 bis 50:1 bevorzugt 0,05:1 bis 20:1 liegt.

Die Füllstoffe werden hierbei in Mengen im Bereich von 10 bis 500 Gew.-Teile bezogen auf 100 Gew.-Teile Kautschuk eingesetzt. Bevorzugt werden Mengen in einem Bereich von 20 bis 200 Gew.-Teile eingesetzt.

In einer weiteren Ausführungsform der Erfindung enthalten die Kautschukzusammensetzungen noch Kautschukhilfsmittel, die beispielsweise die Verarbeitungseigenschaften der Kautschukzusammensetzungen verbessern, der Vernetzung der Kautschukzusammensetzungen dienen, die physikalischen Eigenschaften der aus den erfindungsgemäßen Kautschukzusammensetzungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind beispielsweise Vernetzeragentien, wie beispielsweise Schwefel oder Schwefel liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie beispielsweise DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren.

Die gesamte Menge an Kautschukhilfsmitteln liegt im Bereich von 1 bis 300 Gewichtsteilen, bezogen auf 100 Gewichtsteile an Gesamtkautschuk. Bevorzugt werden Mengen in einem Bereich von 5 bis 150 Gewichtsteile an Kautschukhilfsmitteln eingesetzt.

Die Herstellung der vulkanisierbaren Kautschukzusammensetzungen kann in einem einstufigen oder in einem mehrstufigen Verfahren erfolgen, wobei 2 bis 3 Mischstufen bevorzugt sind. So kann beispielsweise die Zugabe von Schwefel und Beschleuniger in einer separaten Mischstufe beispielsweise auf einer Walze erfolgen, wobei Temperaturen im Bereich von 30°C bis 90°C bevorzugt sind. Bevorzugt erfolgt die Zugabe von Schwefel und Beschleuniger in der letzten Mischstufe.

Für die Herstellung der vulkanisierbaren Kautschukzusammensetzungen geeignete Aggregate sind beispielsweise Walzen, Kneter, Innenmischer oder Mischextruder.

Somit sind vulkanisierbare Kautschukzusammensetzungen enthaltend endgruppenfunktionalisierte Polymere mit Endgruppen der Formel (I) oder (II) ein weiterer Gegenstand der Erfindung.

Ein weiterer Gegenstand der Erfindung ist die Verwendung der erfindungsgemäßen vulkanisierbaren Kautschukzusammensetzungen zur Herstellung von Kautschukvulkanisaten, insbesondere für die Herstellung von Reifen, insbesondere Reifenlaufflächen, die einen besonders geringen Rollwiderstand bei hoher Nassrutschfestigkeit und Abriebbeständigkeit aufweisen.

Die erfindungsgemäßen vulkanisierbaren Kautschukzusammensetzungen eignen sich auch zur Herstellung von Formkörpern, beispielsweise für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Beispiel 1: Synthese von Styrol-Butadien-Copolymer, nicht funktionalisiert (Vergleichsbeispiel)

Ein inertisierter 20L-Reaktor wurde mit 8,5 kg Hexan, 1185 g 1,3-Butadien, 315 g Styrol, 8,6 mmol 2,2-Bis(2-tetrahydrofuryl)propan sowie 11,3 mmol Butyllithium befüllt und der Inhalt auf 60°C erwärmt. Es wurde unter Rühren 25 Minuten bei 60°C polymerisiert. Anschließend wurden 11,3 mmol Cetylalkohol zum Abstoppen der anionischen Polymerkettenenden zugesetzt, die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

### Beispiel 2: Synthese von silanolatterminiertem Styrol-Butadien-Copolymer durch Umsetzung mit Cyclosiloxan (Vergleichsbeispiel)

Es wurde wie in Beispiel 1 verfahren. An Stelle des Cetylalkohols wurde jedoch eine zu Butyllithium äquimolare Menge an Hexamethylcyclotrisiloxan (als Lösung in Cyclohexan) zugegeben und der Reaktorinhalt anschließend für weitere 20 Minuten auf 60°C erwärmt.

### Beispiel 3: Synthese von silanhaltigem carboxyterminiertem Styrol-Butadien-Copolymer durch Umsetzung mit Cyclosiloxan und anschließend Silalacton (erfindungsgemäß.)

Es wurde wie in Beispiel 2 verfahren. 20 Minuten nach Zugabe des Hexamethylcyclotrisiloxans wurde zusätzlich eine zu Butyllithium und Hexamethylcyclotrisiloxan äquimolare Menge an 2,2-Dimethyl-1-oxa-4-thia-2-silacyclohexan-6-on (als Lösung in Toluol) zugegeben und für weitere 20 Minuten auf 60°C erwärmt.

### Beispiel 4: Synthese von silanhaltigem carboxyterminiertem Styrol-Butadien-Copolymer mit tertiärer Aminogruppe am Kettenanfang durch Umsetzung mit Cyclosiloxan und anschließend Silalacton (erfindungsgemäß)

Es wurde wie in Beispiel 3 verfahren. Vor Zugabe des Butyllithiums wurde jedoch eine zu Butyllithium äquimolare Menge an Pyrrolidin zugegeben.

### Beispiel 5: Synthese von silanhaltigem hydroxyterminiertem Styrol-Butadien-Copolymer durch Umsetzung mit 1-Oxa-2-silacycloalkan (Vergleichsbeispiel)

Es wurde wie in Beispiel 2 verfahren. An Stelle des Hexamethylcyclotrisiloxans wurde jedoch eine zu Butyllithium äquimolare Menge an 2,2,4-Trimethyl-1-oxa-4-aza-2-silacyclohexan (als Lösung in Hexan) zugegebenen.

Die Polymereigenschaften der Styrol-Butadien-Copolymere aus den Beispielen 1-5 sind in Tabelle 1 zusammengefasst. Aus Tabelle 1 ist ersichtlich, dass die erfindungsgemäßen silanhaltigen carboxyterminierten Polymere der Beispiele 3 und 4 bei gleichem Molekulargewichts- und Polydispersitätsniveau wie die Polymere der Vergleichsbeispiele 1, 2 und 5 deutlich höhere Mooney-Viskositäten und deutlich verringerte Cold-Flow-Werte aufweisen. Geringe Cold-Flow-Werte sind von Vorteil, da die entsprechenden Kautschuke bei der Lagerung eine geringere Fließneigung und somit eine verbesserte Formstabilität besitzen.

### Beispiele 6 a-e: Kautschukzusammensetzungen

Es wurden Reifenlaufflächenkautschukzusammensetzungen hergestellt, die die Styrol-Butadien-Copolymere der Beispiele 1-5 enthalten. Die Bestandteile sind in Tabelle 2 aufgelistet. Die Kautschukzusammensetzungen (ohne Schwefel und Beschleuniger) wurden in einem 1,5-L Kneter hergestellt. Die Bestandteile Schwefel und Beschleuniger wurden anschließend auf einer Walze bei 40°C zugemischt.

**Tabelle 1: Eigenschaften der Styrol-Butadien-Copolymere der Beispiele 1-5**

| SSBR aus Bsp. SSBR Bsp. | Funktionalisierungsreagenz | Vinyl-Gehalt ^{a)} [Gew.-%] | Styrol-Gehalt ^{a)} [Gew.-%] | Tg ^{b)} [°C] | Mₙ^{c)} [kg/mol] | M_{w} / Mₙ ^{c)} | ML1+4 ^{d)} [ME] | Cold Flow ^{e)} [mg/min] |
|---|---|---|---|---|---|---|---|---|
| 1 (Vergleich) | - | 51,5 | 20,9 | -23 | 244 | 1,10 | 42 | 21 |
| 2 (Vergleich) | Hexamethyl-cyclotrisiloxan | 50,6 | 21,3 | -24 | 239 | 1,10 | 41 | 21 |
| 3 (erfindungsgemäß) | 1. Hexamethyl-cyclotrisiloxan | 50,7 | 21,0 | -24 | 246 | 1,09 | 79 | 0 |
| | 2. Silalacton | | | | | | | |
| 4 (erfindungsgemäß) | 1. Hexamethyl-cyclotrisiloxan | 49,9 | 21,9 | -24 | 183 | 1,22 | 56 | 9 |
| | 2. Silalacton | | | | | | | |
| 5 (Vergleich) | 1-Oxa-2-silacycloalkan | 50,9 | 21,5 | -23 | 220 | 1,15 | 37 | 25 |

| | | | | | | | | |
|---|---|---|---|---|---|---|---|---|
| a) Bestimmung des Vinyl- und Styrolgehalts mittels FTIR b) Bestimmung der Glasübergangstemperatur mittels DSC c) Bestimmung der Molmasse Mₙ und der Polydispersität M_{w}/Mₙ mittels GPC (PS-Kalibrierung) d) Bestimmung der Mooney-Viskosität bei 100°C e) Bestimmung des Cold Flow bei 50°C | | | | | | | | |

**Tabelle 2: Bestandteile der Reifenlaufflächenkautschukzusammensetzungen (Angaben in phr: Gewichtsteile pro 100 Gewichtsteile Kautschuk)**

| | **Vergleichsbeispiel** | **Vergleichsbeispiel** | **Erfindungsgemäßes Beispiel** | **Erfindungsgemäßes Beispiel** | **Vergleichsbeispiel** |
|---|---|---|---|---|---|
| | **6a** | **6b** | **6c** | **6d** | **6e** |
| Styrol-Butadien-Copolymer aus Beispiel 1 | 70 | 0 | 0 | 0 | 0 |
| Styrol-Butadien-Copolymer aus Beispiel 2 | 0 | 70 | 0 | 0 | 0 |
| Styrol-Butadien-Copolymer aus Beispiel 3 | 0 | 0 | 70 | 0 | 0 |
| Styrol-Butadien-Copolymer aus Beispiel 4 | 0 | 0 | 0 | 70 | 0 |
| Styrol-Butadien-Copolymer aus Beispiel 5 | 0 | 0 | 0 | 0 | 70 |
| hoch-cis-haltiges Polybutadien (BUNA™ CB 24 der Lanxess Deutschland GmbH) | 30 | 30 | 30 | 30 | 30 |
| Kieselsäure (Ultrasil® 7000) | 90 | 90 | 90 | 90 | 90 |
| Ruß (Vulcan® J/N 375) | 7 | 7 | 7 | 7 | 7 |
| TDAE-Öl (Vivatec 500) | 36,3 | 36,3 | 36,3 | 36,3 | 36,3 |
| Verarbeitungshilfsmittel (Aflux 37) | 3 | 3 | 3 | 3 | 3 |
| Stearinsäure (Edenor C 18 98-100) | 1 | 1 | 1 | 1 | 1 |
| Alterungsschutzmittel (Vulkanox® 4020/LG der Lanxess Deutschland GmbH) | 2 | 2 | 2 | 2 | 2 |
| Alterungsschutzmittel (Vulkanox® HS/LG der Lanxess Deutschland GmbH) | 2 | 2 | 2 | 2 | 2 |
| Zinkoxid (Zinkweiß Rotsiegel) | 3 | 3 | 3 | 3 | 3 |
| Wachs (Antilux 654) | 2 | 2 | 2 | 2 | 2 |
| Silan (Si 69® von Evonik) | 7,2 | 7,2 | 7,2 | 7,2 | 7,2 |
| Diphenylguanidin (Rhenogran DPG-80) | 2,75 | 2,75 | 2,75 | 2,75 | 2,75 |
| Sulfenamid (Vulkacit® NZ/EGC der Lanxess Deutschland GmbH) | 1,6 | 1,6 | 1,6 | 1,6 | 1,6 |
| Schwefel (Mahlschwefel 90/95 Chancel) | 1,6 | 1,6 | 1,6 | 1,6 | 1,6 |
| Sulfonamid (Vulkalent® E/C) | 0,2 | 0,2 | 0,2 | 0,2 | 0,2 |

### Beispiele 7 a-e: Vulkanisateigenschaften

Die Reifenlaufflächenkautschukzusammensetzungen der Beispiele 6a-e nach Tabelle 2 wurden 20 Minuten bei 160°C vulkanisiert. Die Eigenschaften der entsprechenden Vulkanisate sind in Tabelle 3 als Beispiele 7a-e aufgeführt. Die Vulkanisateigenschaften der vulkanisierten Probe aus Vergleichsbeispiel 7a mit dem nicht funktionalisierten Styrol-Butadien-Copolymer sind mit dem Index 100 versehen. Alle Werte größer als 100 in Tabelle 3 bedeuten eine entsprechende prozentuale Verbesserung der jeweiligen Prüfeigenschaft.

**Tabelle 3: Vulkanisateigenschaften**

| | **Vergleichsbeispiel** | **Vergleichsbeispiel** | **Erfindungsgemäßes Beispiel** | **Erfindungsgemäßes Beispiel** | **Vergleichsbeispiel** |
|---|---|---|---|---|---|
| | **7a** | **7b** | **7c** | **7d** | **7e** |
| **Styrol-Butadien-Copolymer im Vulkanisat:** | | | | | |
| Styrol-Butadien-Copolymer aus Beispiel 1 | X | | | | |
| Styrol-Butadien-Copolymer aus Beispiel 2 | | X | | | |
| Styrol-Butadien-Copolymer aus Beispiel 3 | | | X | | |
| Styrol-Butadien-Copolymer aus Beispiel 4 | | | | X | |
| Styrol-Butadien-Copolymer aus Beispiel 5 | | | | | X |

| **Vulkanisateigenschaften:** | | | | | |
|---|---|---|---|---|---|
| tan δ bei 0°C (dynamische Dämpfung bei 10 Hz) | 100 | 112 | 125 | 125 | 115 |
| tan δ bei 60°C (dynamische Dämpfung bei 10 Hz) | 100 | 110 | 143 | 145 | 117 |
| tan δ-Maximum (MTS-Amplitudensweep bei 1 Hz, 60°C) | 100 | 115 | 134 | 139 | 117 |
| ΔG* (G*@0.5% - G*@15% aus MTS-Amplitudensweep) [MPa] | 100 | 159 | 254 | 255 | 189 |
| Rückprallelastizität bei 60°C [%] | 100 | 113 | 118 | 121 | 114 |
| Abrieb (DIN 53516) [mm³] | 100 | 119 | 135 | 130 | 113 |

Die Rückprallelastizität bei 60°C, die dynamische Dämpfung tanδ bei 60°C, das tanδ-Maximum im Amplitudensweep sowie die Moduldifferenz ΔG* zwischen niedriger und hoher Dehnung im Amplitudensweep sind Indikatoren für den Rollwiderstand im Reifen. Wie aus Tabelle 3 ersichtlich, zeichnen sich die Vulkanisate der erfindungsgemäßen Beispiele 7c und 7d durch besonders hohe Verbesserungen dieser rollwiderstandsrelevanten Eigenschaften aus.

Die dynamische Dämpfung tanδ bei 0°C ist ein Indikator für die Nassrutschfestigkeit des Reifens. Wie aus Tabelle 3 ersichtlich, zeichnen sich die Vulkanisate der erfindungsgemäßen Beispiele 7c und 7d durch besonders hohe Verbesserungen dieser nassrutschrelevanten Eigenschaft aus.

Der DIN-Abrieb ist ein Indikator für die Abriebfestigkeit der Reifenlauffläche. Wie aus Tabelle 3 ersichtlich, zeichnen sich die Vulkanisate der erfindungsgemäßen Beispiele 7c und 7d durch besonders hohe Verbesserungen dieser Eigenschaft aus.

## Patentansprüche

1. Endgruppenfunktionatisierte Polymere, **dadurch gekennzeichnet, dass** die Polymere am Polymerkettenende eine silanhaltige Carboxygruppe der Formel (I) 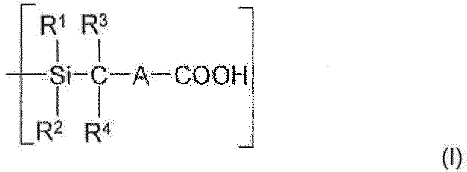 aufweisen, wobei
R¹, R² gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
R³, R⁴ gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
A für einen divalenten organischen Rest steht, der neben C und H ein oder mehrere Heteroatome, bevorzugt O, N, S oder Si enthalten kann,
**dadurch gekennzeichnet, dass** es sich bei den Polymeren um Dienpolymere, bevorzugt Polybutadien oder Polyisopren, oder durch Copolymerisation von Dienen mit vinylaromatischen Monomeren erhältliche Dien-Copolymere, bevorzugt Butadien-Isopren-Copolymer, Butadien-Styrol-Copolymer, Isopren-Styrol-Copolymer oder Butadien-Isopren-Styrol-Terpolymer, handelt.

2. Endgruppenfunktionalisierte Polymere nach Anspruch 1, **dadurch gekennzeichnet, dass** die Endgruppen der Polymere als Carboxylate der Formel (II) 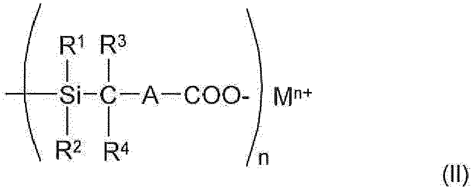 vorliegen, wobei
R¹, R² gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
R³, R⁴ gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
A für einen divalenten organischen Rest steht, der neben C und H ein oder mehrere Heteroatome, bevorzugt O, N, S oder Si enthalten kann,
n eine ganze Zahl von 1 bis 4 ist,
M ein Metall oder Halbmetall der Wertigkeit 1 bis 4 ist, vorzugsweise Li, Na, K, Mg, Ca, Zn, Fe, Co, Ni, Al, Nd, Ti, Sn, Si, Zr, V, Mo oder W,
**dadurch gekennzeichnet, dass** es sich bei den Polymeren um Dienpolymere, bevorzugt Polybutadien oder Polyisopren, oder durch Copolymerisation von Dienen mit vinylaromatischen Monomeren erhältliche Dien-Copolymere, bevorzugt Butadien-Isopren-Copolymer, Butadien-Styrol-Copolymer, Isopren-Styrol-Copolymer oder Butadien-Isopren-Styrol-Terpolymer, handelt.

3. Endgruppenfunktionalisierte Polymere nach Anspruch 1 oder 2, zusätzlich enthaltend ein oder mehrere divalente Strukturelemente der Formel (V), 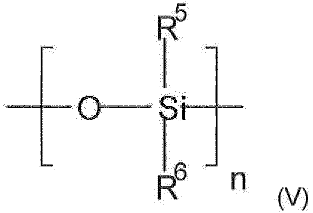 bevorzugt abgeleitet von Cyclosiloxanen, besonders bevorzugt von Cyclosiloxanen der Formel (IV) 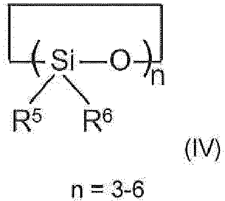 wobei R⁵, R⁶ in Formel (IV) gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si, enthalten können, und ganz besonders bevorzugt Hexamethylcyclatrisiloxan, Octamethylcyclotetrasiloxan, Decamethylcyclopentasiloxan oder Dodecamethylcyclohexasiloxan sind.

4. Endgruppenfunktionalisierte Polymere nach einem der Ansprüche 1 bis 3, **dadurch gekennzeichnet, dass** das Polymer durch Umsetzung reaktiver Polymerkettenenden mit einem oder mehreren Funktionalisierungsreagenzien in Form von Silalactonen erhältlich ist.

5. Endgruppenfunktionalisierte Polymere nach einem der Ansprüche 1 bis 4, **dadurch gekennzeichnet, dass** es sich bei den Silalactonen um Verbindungen der Formel (III) 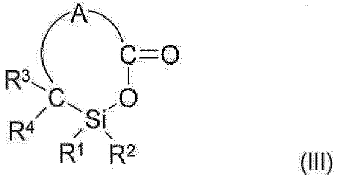 handelt, wobei
R¹, R² gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si, enthalten können,
R³, R⁴ gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si, enthalten können,
A für einen divalenten organischen Rest steht, der neben C und H ein oder mehrere Heteroatome, bevorzugt O, N, S oder Si, enthalten kann.

6. Endgruppenfunktionalisierte Polymere nach einem der Ansprüche 1 bis 5, **dadurch gekennzeichnet, dass** die Polymere mittlere Molgewichte (Zahlenmittel, Mₙ) von 10.000 bis 2.000.000 g/mol, bevorzugt von 100.000 bis 1.000.000 g/mol aufweisen.

7. Endgruppenfunktionalisierte Polymere nach einem der Ansprüche 1 bis 6, **dadurch gekennzeichnet, dass** die Polymere Glasübergangstemperaturen von -110°C bis +20°C, bevorzugt -110°C bis 0°C aufweisen.

8. Verwendung von Silalactonen zur Herstellung von endgruppenfunktionalisierten Polymeren nach einem der Ansprüche 1 bis 7.

9. Verfahren zur Herstellung von endgruppenfunktionalisierten Polymeren nach einem der Ansprüche 1 bis 7, **dadurch gekennzeichnet, dass** ein oder mehrere Silalactone zu Polymeren mit reaktiven Polymerkettenenden zugegeben werden.

10. Verfahren nach Anspruch 9, **dadurch gekennzeichnet, dass** die Zugabe der Silalactone nach Abschluss der Polymerisation erfolgt.

11. Verfahren nach Anspruch 9 oder 10, **dadurch gekennzeichnet, dass** ein Überschuss oder eine stöchiometrische Menge oder ein Unterschuss an Silalactonen bezogen auf die Menge an Polymer eingesetzt wird.

12. Verfahren nach einem der Ansprüche 9 bis 11, **dadurch gekennzeichnet, dass** die Menge an Silalactonen von 0,005 bis 2 Gew.-%, bevorzugt von 0,01 bis 1 Ges.-%, bezogen auf die Menge an Polymer, beträgt.

13. Verfahren nach einem der Ansprüche 9 bis 12, **dadurch gekennzeichnet, dass** nach der Polymerisation und vor der Zugabe der Silalactonen Cyclosiloxane der Formel (IV) 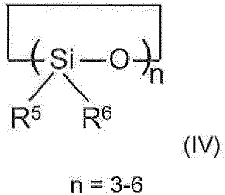 eingesetzt werden, wobei R⁵, R⁶ in Formel (IV) gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si, enthalten können, bevorzugt sind Hexamethylcyclotrisiloxan, Octamethylcyclotetrasiloxan, Decamethylcyclopentasiloxan oder Dodecamethylcyclohexasiloxan.

14. Verfahren nach Anspruch 13, **dadurch gekennzeichnet, dass** die Menge an Cyclosiloxanen der Formel (IV) in einem Bereich von 0,002 bis 4 Gew.-%, bevorzugt in einem Bereich von 0,005 bis 2 Gew.-%, bezogen auf die Menge an Polymer liegen.

15. Verfahren nach Anspruch 13 oder 14, **dadurch gekennzeichnet, dass** das Stoffmengenverhältnis Silalacton zu Cyclosiloxan von 20:1 bis 1:1, bevorzugt von 10:1 bis 1:1, besonders bevorzugt von 3:1 bis 1:1 beträgt.

16. Verwendung von endgruppenfunktionalisierten Polymeren nach einem der vorgenannten Ansprüche zur Herstellung von vulkanisierbaren Kautschukzusammensetzungen.

17. Vulkanisierbare Kautschukzusammensetzungen enthaltend
a) endgruppenfunktionalisierte Polymere nach einem der Ansprüche 1 - 8 sowie
b) Alterungsschutzmittel, Öle, Füllstoffe, Kautschuke und/oder weitere Kautschukhilfsmittel aufweisen.

18. Verwendung der vulkanisierbaren Kautschukzusammensetzungen nach Anspruch 17 zur Herstellung von Formkörpern, insbesondere Kabelmänteln, Schläuchen, Treibriemen, Förderbändern, Walzenbelägen, Schuhsohlen, Dichtungsringen, Dämpfungselementen öder Reifen, insbesondere Reifenlaufflächen

19. Formkörper, insbesondere Reifen, erhältlich nach Anspruch 18.

## Claims

1. End group-functionalized polymers, **characterized in that** the polymers have, at the end of the polymer chain, a silane-containing carboxyl group of the formula (I) 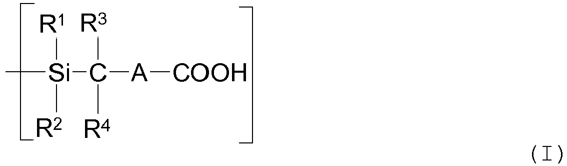 where
R¹, R² are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably 0, N, S or Si,
R³, R⁴ are the same or different and are each an H, alkyl, cycloalkyl, aryl, alkaryl or aralkyl radical which may contain one or more heteroatoms, preferably 0, N, S or Si,
A is a divalent organic radical which, as well as C and H, may contain one or more heteroatoms, preferably 0, N, S or Si,
**characterized in that** the polymers are diene polymers, preferably polybutadiene or polyisoprene, or diene copolymers obtainable by copolymerization of dienes with vinylaromatic monomers, preferably butadiene-isoprene copolymer, butadienestyrene copolymer, isoprene-styrene copolymer or butadiene-isoprene-styrene terpolymer.

2. End group-functionalized polymers according to Claim 1, **characterized in that** the end groups of the polymers are present as carboxylates of the formula (II) 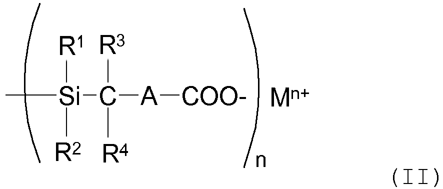 where
R¹, R² are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably 0, N, S or Si,
R³, R⁴ are the same or different and are each an H, alkyl, cycloalkyl, aryl, alkaryl or aralkyl radical which may contain one or more heteroatoms, preferably 0, N, S or Si,
A is a divalent organic radical which, as well as C and H, may contain one or more heteroatoms, preferably 0, N, S or Si,
n is an integer from 1 to 4,
M is a metal or semimetal of valency 1 to 4, preferably Li, Na, K, Mg, Ca, Zn, Fe, Co, Ni, Al, Nd, Ti, Sn, Si, Zr, V, Mo or W, **characterized in that** the polymers are diene polymers, preferably polybutadiene or polyisoprene, or diene copolymers obtainable by copolymerization of dienes with vinylaromatic monomers, preferably butadiene-isoprene copolymer, butadiene-styrene copolymer, isoprene-styrene copolymer or butadiene-isoprene-styrene terpolymer.

3. End group-functionalized polymers according to Claim 1 or 2, additionally containing one or more divalent structural elements of the formula (V) 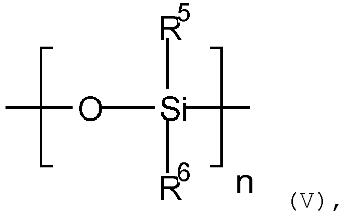 preferably derived from cyclosiloxanes, more preferably from cyclosiloxanes of the formula (IV) 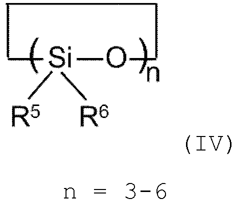 where R⁵, R⁶ in formula (IV) are the same or different and are each an H, alkyl, cycloalkyl, aryl, alkaryl or aralkyl radical which may contain one or more heteroatoms, preferably 0, N, S or Si, and most preferably hexamethylcyclotrisiloxane, octamethylcyclotetrasiloxane,
decamethylcyclopentasiloxane or dodecamethylcyclohexasiloxane.

4. End group-functionalized polymers according to any of Claims 1 to 3, **characterized in that** the polymer is obtainable by reaction of reactive ends of the polymer chain with one or more functionalizing reagents in the form of silalactones.

5. End group-functionalized polymers according to any of Claims 1 to 4, **characterized in that** the silalactones are compounds of the formula (III) 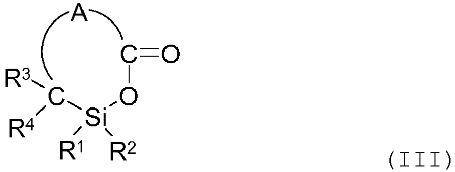 where
R¹, R² are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably 0, N, S or Si,
R³, R⁴ are the same or different and are each an H, alkyl, cycloalkyl, aryl, alkaryl or aralkyl radical which may contain one or more heteroatoms, preferably 0, N, S or Si,
A is a divalent organic radical which, as well as C and H, may contain one or more heteroatoms, preferably 0, N, S or Si.

6. End group-functionalized polymers according to any of Claims 1 to 5, **characterized in that** the polymers have mean molar masses (number-average, Mₙ) of 10 000 to 2 000 000 g/mol, preferably of 100 000 to 1 000 000 g/mol.

7. End group-functionalized polymers according to any of Claims 1 to 6, **characterized in that** the polymers have glass transition temperatures of -110°C to +20°C, preferably -110°C to 0°C.

8. Use of silalactones for preparation of end group-functionalized polymers according to any of Claims 1 to 7.

9. Process for preparing end group-functionalized polymers according to any of Claims 1 to 7, **characterized in that** one or more silalactones are added to polymers having reactive ends of the polymer chain.

10. Process according to Claim 9, **characterized in that** the silalactones are added after completion of the polymerization.

11. Process according to Claim 9 or 10, **characterized in that** an excess or a stoichiometric amount or a deficiency of silalactones is used, based on the amount of polymer.

12. Process according to any of Claims 9 to 11, **characterized in that** the amount of silalactones is from 0.005 to 2% by weight, preferably from 0.01 to 1% by weight, based on the amount of polymer.

13. Process according to any of Claims 9 to 12, **characterized in that** the polymerization is followed and the addition of the silalactones is preceded by the use of cyclosiloxanes of the formula (IV) 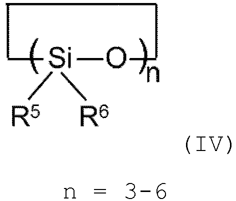 where R⁵, R⁶ in formula (IV) are the same or different and are each an H, alkyl, cycloalkyl, aryl, alkaryl or aralkyl radical which may contain one or more heteroatoms, preferably 0, N, S or Si, preferably hexamethylcyclotrisiloxane, octamethylcyclotetrasiloxane, decamethylcyclopentasiloxane or dodecamethylcyclohexasiloxane.

14. Process according to Claim 13, **characterized in that** the amount of cyclosiloxanes of the formula (IV) is within a range from 0.002 to 4% by weight, preferably within a range from 0.005 to 2% by weight, based on the amount of polymer.

15. Process according to Claim 13 or 14, **characterized in that** the ratio of silalactone to cyclosiloxane is from 20:1 to 1:1, preferably from 10:1 to 1:1, more preferably from 3:1 to 1:1.

16. Use of end group-functionalized polymers according to any of the preceding claims for production of vulcanizable rubber compositions.

17. Vulcanizable rubber compositions comprising
a) end group-functionalized polymers according to any of Claims 1 - 8 and
b) ageing stabilizers, oils, fillers, rubbers and/or further rubber auxiliaries.

18. Use of the vulcanizable rubber compositions according to Claim 17 for production of mouldings, especially cable sheaths, hoses, drive belts, conveyor belts, roll covers, shoe soles, gasket rings, damping elements or tyres, especially tyre treads.

19. Mouldings, especially tyres, obtainable according to Claim 18.

## Revendications

1. Polymères fonctionnalisés par des groupes terminaux, **caractérisés en ce que** les polymères comprennent à l'extrémité des chaînes polymères un groupe carboxy contenant un silane de formule (I) 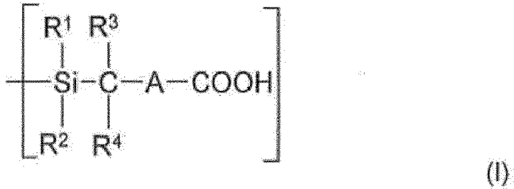 dans laquelle
R¹, R² sont identiques ou différents, et représentent un radical H, alkyle, alcoxy, cycloalkyle, cycloalcoxy, aryle, aryloxy, alkaryle, alkaryloxy, aralkyle ou aralcoxy, qui peuvent contenir un ou plusieurs hétéroatomes, de préférence O, N, S ou Si, R³, R⁴ sont identiques ou différents, et représentent un radical H, alkyle, cycloalkyle, aryle, alkaryle ou aralkyle, qui peuvent contenir un ou plusieurs hétéroatomes, de préférence O, N, S ou Si,
A représente un radical organique bivalent, qui peut contenir en plus de C et H un ou plusieurs hétéroatomes, de préférence O, N, S ou Si,
**caractérisés en ce que** les polymères sont des polymères diéniques, de préférence le polybutadiène ou le polyisoprène, ou des copolymères diéniques pouvant être obtenus par copolymérisation de diènes avec des monomères vinylaromatiques, de préférence un copolymère butadiène-isoprène, un copolymère butadiène-styrène, un copolymère isoprène-styrène ou un terpolymère butadiène-isoprène-styrène.

2. Polymères fonctionnalisés par des groupes terminaux selon la revendication 1, **caractérisés en ce que** les groupes terminaux des polymères se présentent sous la forme de carboxylates de formule (II) 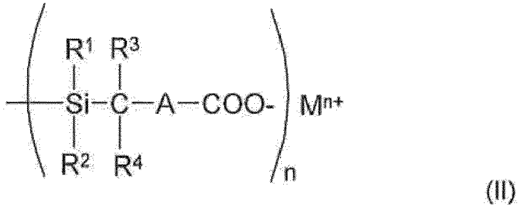 dans laquelle
R¹, R² sont identiques ou différents, et représentent un radical H, alkyle, alcoxy, cycloalkyle, cycloalcoxy, aryle, aryloxy, alkaryle, alkaryloxy, aralkyle ou aralcoxy, qui peuvent contenir un ou plusieurs hétéroatomes, de préférence O, N, S ou Si, R³, R⁴ sont identiques ou différents, et représentent un radical H, alkyle, cycloalkyle, aryle, alkaryle ou aralkyle, qui peuvent contenir un ou plusieurs hétéroatomes, de préférence O, N, S ou Si,
A représente un radical organique bivalent, qui peut contenir en plus de C et H un ou plusieurs hétéroatomes, de préférence O, N, S ou Si,
n représente un nombre entier de 1 à 4,
M représente un métal ou semi-métal d'une valence de 1 à 4, de préférence Li, Na, K, Mg, Ca, Zn, Fe, Co, Ni, Al, Nd, Ti, Sn, Si, Zr, V, Mo ou W,
**caractérisés en ce que** les polymères sont des polymères diéniques, de préférence le polybutadiène ou le polyisoprène, ou des copolymères diéniques pouvant être obtenus par copolymérisation de diènes avec des monomères vinylaromatiques, de préférence un copolymère butadiène-isoprène, un copolymère butadiène-styrène, un copolymère isoprène-styrène ou un terpolymère butadiène-isoprène-styrène.

3. Polymères fonctionnalisés par des groupes terminaux selon la revendication 1 ou 2, contenant en outre un ou plusieurs éléments structuraux bivalents de formule (V) 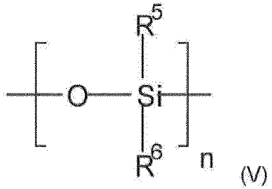 de préférence dérivés de cyclosiloxanes, de manière particulièrement préférée de cyclosiloxanes de formule (IV) 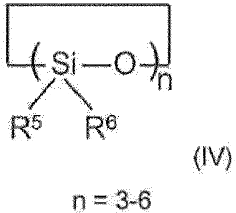 R⁵, R⁶ dans la formule (IV) étant identiques ou différents, et représentant un radical H, alkyle, cycloalkyle, aryle, alkaryle ou aralkyle, qui peuvent contenir un ou plusieurs hétéroatomes, de préférence O, N, S ou Si, et sont de manière tout particulièrement préférée hexaméthylcyclotrisiloxane, octaméthylcyclotétrasiloxane, décaméthylcyclopentasiloxane ou dodécaméthylcyclohexasiloxane.

4. Polymères fonctionnalisés par des groupes terminaux selon l'une quelconque des revendications 1 à 3, **caractérisés en ce que** le polymère peut être obtenu par réaction d'extrémités de chaînes polymères réactives avec un ou plusieurs réactifs de fonctionnalisation sous la forme de silalactones.

5. Polymères fonctionnalisés par des groupes terminaux selon l'une quelconque des revendications 1 à 4, **caractérisés en ce que** les silalactones sont des composés de formule (III) 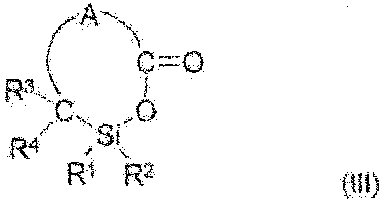 dans laquelle
R¹, R² sont identiques ou différents, et représentent un radical H, alkyle, alcoxy, cycloalkyle, cycloalcoxy, aryle, aryloxy, alkaryle, alkaryloxy, aralkyle ou aralcoxy, qui peuvent contenir un ou plusieurs hétéroatomes, de préférence O, N, S ou Si,
R³, R⁴ sont identiques ou différents, et représentent un radical H, alkyle, cycloalkyle, aryle, alkaryle ou aralkyle, qui peuvent contenir un ou plusieurs hétéroatomes, de préférence O, N, S ou Si,
A représente un radical organique bivalent, qui peut contenir en plus de C et H un ou plusieurs hétéroatomes, de préférence O, N, S ou Si.

6. Polymères fonctionnalisés par des groupes terminaux selon l'une quelconque des revendications 1 à 5, **caractérisés en ce que** les polymères présentent des poids moléculaires moyens (moyenne en nombre, Mₙ) de 10 000 à 2 000 000 g/mol, de préférence de 100 000 à 1 000 000 g/mol.

7. Polymères fonctionnalisés par des groupes terminaux selon l'une quelconque des revendications 1 à 6, **caractérisés en ce que** les polymères présentent des températures de transition vitreuse de -110 °C à +20 °C, de préférence de -110 °C à 0 °C.

8. Utilisation de silalactones pour la fabrication de polymères fonctionnalisés par des groupes terminaux selon l'une quelconque des revendications 1 à 7.

9. Procédé de fabrication de polymères fonctionnalisés par des groupes terminaux selon l'une quelconque des revendications 1 à 7, **caractérisé en ce qu'**une ou plusieurs silalactones sont ajoutées à des polymères contenant des extrémités de chaînes polymères réactives.

10. Procédé selon la revendication 9, **caractérisé en ce que** l'ajout des silalactones a lieu après la fin de la polymérisation.

11. Procédé selon la revendication 9 ou 10, **caractérisé en ce qu'**un excès ou une quantité stoechiométrique ou un déficit de silalactones par rapport à la quantité de polymère est utilisé.

12. Procédé selon l'une quelconque des revendications 9 à 11, **caractérisé en ce que** la quantité de silalactones est de 0,005 à 2 % en poids, de préférence de 0,01 à 1 % en poids, par rapport à la quantité de polymère.

13. Procédé selon l'une quelconque des revendications 9 à 12, **caractérisé en ce qu'**après la polymérisation et avant l'ajout des silalactones, des cyclosiloxanes de formule (IV) 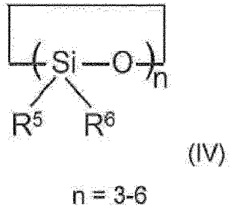 sont utilisés, R⁵, R⁶ dans la formule (IV) étant identiques ou différents, et représentant un radical H, alkyle, cycloalkyle, aryle, alkaryle ou aralkyle, qui peuvent contenir un ou plusieurs hétéroatomes, de préférence O, N, S ou Si, et sont de préférence hexaméthylcyclotrisiloxane, octaméthylcyclotétrasiloxane, décaméthylcyclopentasiloxane ou dodécaméthylcyclohexasiloxane.

14. Procédé selon la revendication 13, **caractérisé en ce que** la quantité de cyclosiloxanes de formule (IV) se situe dans une plage allant de 0,002 à 4 % en poids, de préférence dans une plage allant de 0,005 à 2 % en poids, par rapport à la quantité de polymère.

15. Procédé selon la revendication 13 ou 14, **caractérisé en ce que** la proportion entre la silalactone et le cyclosiloxane est de 20:1 à 1:1, de préférence de 10:1 à 1:1, de manière particulièrement préférée de 3:1 à 1:1.

16. Utilisation de polymères fonctionnalisés par des groupes terminaux selon l'une quelconque des revendications précédentes pour la fabrication de compositions de caoutchouc vulcanisables.

17. Compositions de caoutchouc vulcanisables, contenant :
a) des polymères fonctionnalisés par des groupes terminaux selon l'une quelconque des revendications 1 à 8, et
b) des agents antivieillissement, des huiles, des charges, des caoutchoucs et/ou d'autres adjuvants de caoutchouc.

18. Utilisation de compositions de caoutchouc vulcanisables selon la revendication 17 pour la fabrication de corps moulés, notamment d'enrobages de câbles, de tuyaux, de courroies d'entraînement, de bandes de transport, de revêtements de cylindres, de semelles de chaussures, d'anneaux d'étanchéité, d'éléments d'amortissement ou de pneus, notamment de surfaces de roulement.

19. Corps moulés, notamment pneus, pouvant être obtenus selon la revendication 18.
